(19) Europäisches Patentamt / European Patent Office / Office européen des brevets

(11) **EP 4 693 430 A1**

(12) **EUROPEAN PATENT APPLICATION**
published in accordance with Art. 153(4) EPC

(43) Date of publication:
**11.02.2026   Bulletin 2026/07**

(21) Application number: **24779827.5**

(22) Date of filing: **21.03.2024**

(51) International Patent Classification (IPC):
**H01M 4/13** *(2010.01)*        **H01M 4/62** *(2006.01)*
**H01M 10/052** *(2010.01)*

(52) Cooperative Patent Classification (CPC):
**H01M 4/13; H01M 4/62; H01M 10/052;** Y02E 60/10

(86) International application number:
**PCT/JP2024/010981**

(87) International publication number:
**WO 2024/203706 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **30.03.2023   JP 2023054712**

(71) Applicant: **KRI, Inc.**
**Kyoto-shi, Kyoto 600-8813 (JP)**

(72) Inventor: **KONDOU, Fumiya**
**Kyoto-shi, Kyoto 600-8813 (JP)**

(74) Representative: **Müller-Boré & Partner**
**Patentanwälte PartG mbB**
**Friedenheimer Brücke 21**
**80639 München (DE)**

(54) **COMPOSITION FOR FORMING NEGATIVE ELECTRODE ACTIVE MATERIAL LAYER FOR LITHIUM-ION SECONDARY BATTERY**

(57)     This invention relates to a composition for forming a negative electrode active material layer for lithium ion secondary batteries, the composition comprising at least a negative electrode active material and a carbon nanotube, wherein the composition satisfies the following formula (1):

$$2.15 \, M_1 + 0.00454 \, (M_2 \times D^2) + 6.54 \leq 7.40 \quad (1)$$

wherein $M_1$ represents the content of a binding agent (mass%); $M_2$ represents the content of a thickener and/or dispersant (mass%); and D represents an average particle size ($\mu$m) of the negative electrode active material.

**Description**

Technical Field

The present invention relates to a composition for forming a negative electrode active material layer for lithium ion secondary batteries.

Background Art

The lithium ion battery (LIB) business has achieved dramatic growth through continuous technological development for making portable devices smaller, lighter, more functional, etc. (in pursuit of convenience), while taking advantage of its high energy density, high voltage, safety features, etc. Now that global environmental issues and resource issues are in the spotlight, policies such as promoting the widespread use of eco-cars and switching to renewable energy are expected to continue to drive the market growth of lithium ion batteries. Meanwhile, if lithium ion batteries continue to be used for privately owned electric vehicles (EVs) and stationary electricity storage (e.g., leveling of renewable energy), the amount of lithium ion batteries that will be needed in 2030 is calculated to be approximately 10 times the amount of lithium ion batteries in 2018. Since a situation unfavorable to users from the viewpoint of the economy, such as a sharp increase in battery costs due to resource shortages or the like may possibly occur, research and development on reuse from the viewpoint of how to use a single battery for a longer period of time or on recycling from the viewpoint of resource recovery is becoming more active. Extending battery life is also effective from the standpoint of life cycle assessment (LCA).

New proposals have been made regarding the nature of mobility, such as with EVs. CASE, MaaS, and the like that aim to improve user convenience are becoming a reality. There are signs that mobility, such as with EVs, will shift from private ownership to sharing in the future. In such a trend, artificial intelligence electric vehicles (AIEVs), which are expected to expand in the market in the future, are AI-powered EVs in which driving is automated, vehicles are shared, and cars are not individually owned but are managed by a management company. The management company provides mobility services (CASE) and various services required by the user in the vehicle (MaaS). In addition, since the operation control and charge and discharge control can be made by the management company, operation in consideration of battery life, safety, etc. is feasible. Further, sharing vehicles can reduce the burden on the user to about one-fifth that of individual ownership, thus resulting in highly economical operation. That is, replacing private cars, which are mainly gasoline-powered vehicles, with AIEVs (shared cars) in the future is expected to, for example, contribute to the global environment, reduce traffic accidents and traffic congestion, provide a new transportation means for aging and depopulated areas, reduce personal expenses, and make effective use of travel time. In addition, it will also become possible for AIEVs to function as huge electricity storage systems, in which electricity generated from highly variable renewable energy sources is automatically charged by the management system of the management company and discharged as required.

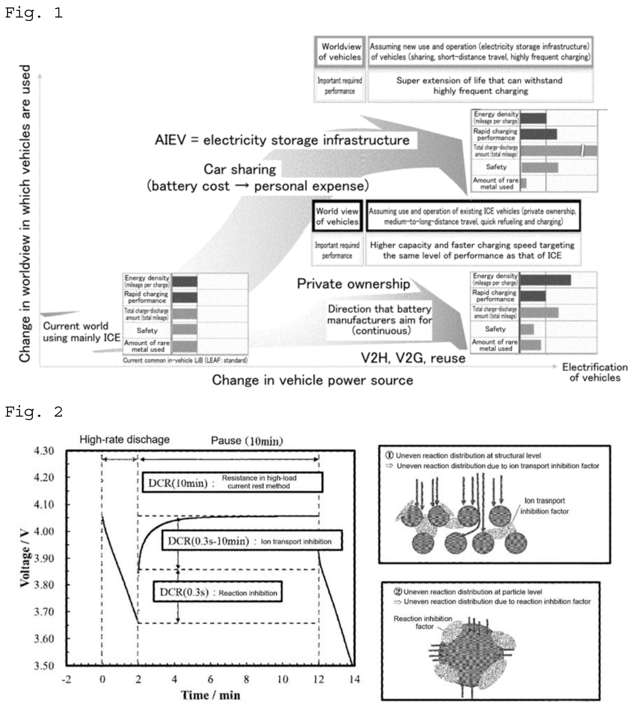

However, achieving this will require rethinking the direction of development of lithium ion batteries, which are currently the mainstream (Fig. 1).

In particular, dramatically extending the life of batteries installed in electric vehicles is essential. To achieve AIEVs, unlike in the case of private ownership of a vehicle, the total mileage of the vehicle must be, for example, 500,000 km or more. If battery life is at the current level, batteries must be replaced several times, which is less economical and also does not solve resource problems. With respect to required battery performance, life of the battery is considered more important than energy density (mileage) and quick rechargeability, which are primary requirements at present. For example, a single cell must ensure an energy density of 400 Wh/L, providing a mileage of 200 to 300 km with a 20 to 30 kWh battery pack. However, in actual operational life, the target life needs to be at least five times more than the current level.

Summary of Invention

Technical Problem

So far, various studies have been made on extending battery life. When extending the actual operation life to at least five times the current life, consideration of the issue from a new perspective is necessary. With respect to the degradation of batteries, degradation factors, such as degradation due to oxidation and reduction of active materials and components, degradation due to lithium ion insertion into or desorption from the active materials, lithium ion consumption due to, for example, electrolyte degradation, and degradation due to electrode loosening, have been often considered in the past. However, in the present invention, the present invention focuses on the overvoltage factor.

The present inventors defined a new degradation mechanism called "degradation by an overvoltage factor (current $\times$ resistance)," and thereby explained phenomena such as low temperature degradation and secondary degradation. Degradation due to the overvoltage factor is defined as a degradation factor affected by load current and battery resistance (DC resistance), and, for example, degradation during low-temperature cycling can be explained as a result of increased resistance at low temperatures, and degradation due to rapid charging can be explained as a result of increased load current. In addition, as the battery deteriorates, the resistance increases. Further, as the capacity deteriorates, the load (apparent load) on a living active material portion increases when the same current as that at the beginning is applied. Further, if gas or other substances accumulate in a group of electrodes, a load is applied to the electrode part other than the gas pool, and to an active material, because the gas does not allow ions to pass therethrough. From this viewpoint, one factor that affects battery life as an overvoltage factor is uneven reaction distribution in the electrode. Unless a uniform reaction occurs in the electrode, a load is accumulated on, for example, some of the active materials used in the electrode during long-term operation of the battery. For example, in the negative electrode, lithium ions are consumed due to strong local reduction, and in the worst case, lithium electrodeposition etc. are induced. Therefore, after the repetition of a certain number of charge-discharge cycles, a sharp decrease in capacity and a sharp increase in resistance (secondary degradation) occur in most cases. By achieving a uniform reaction in the battery and inhibiting uneven reaction distribution in the battery, this secondary degradation (a sharp decrease in capacity) can be inhibited and battery life can be dramatically extended. Therefore, it is important to make a reaction in the battery uniform. However, little work has been done to achieve a uniform reaction in the battery.

In order to achieve a uniform reaction in the battery, it is important to form an electrode structure that allows for uniform ion transport in the electrode. As such a means, increasing the porosity rate of electrodes or reducing the basis weight of electrodes has been studied. However, since these methods involve a reduction in energy density (mileage), these methods alone are limited in terms of ensuring the 400 Wh/L level. For achieving uniform ion transport in the electrode, it is also considered effective to eliminate factors that can inhibit ion transport in the electrode, such as electrode constituent materials, such as binders usually used to impart strength to electrodes, thickeners used to stabilize the electrode slurry, and dispersants. However, reducing or eliminating these constituent materials significantly reduces the electrode strength, resulting in failure to follow the volume change of the electrode upon charge and discharge, and the life characteristics would instead be reduced due to the lack of current collection paths and other factors.

A uniform reaction in the battery may be achieved by reducing the particle size of a negative electrode active material. The reduced particle size of a negative electrode active material increases the reaction area, thus reducing the lithium ion flux per unit area. In particular, this is expected to reduce the risk of lithium deposition under risk of lithium deposition and/or during long-term use, and improve life characteristics. However, according to the present inventors' research, a simple reduction in the particle size of a negative electrode active material accelerates degradation due to decomposition of the electrolyte caused by an increase in reaction area, and also increases the number of starting points for structural collapse. This will require large amounts of binders, thickeners, dispersants, and the like to maintain the electrode strength. As a result, it is impossible to achieve a uniform reaction in the battery, failing to improve life characteristics.

The present invention is intended to solve the above problems. An object of the present invention is to provide a composition for forming an electrode active material layer capable of achieving more uniform reactions in batteries, and producing batteries with excellent charge-discharge cycle characteristics.

Solution to Problem

In view of the above problems, the present inventors conducted intensive research. As a result, the present inventors found that when the content of a binding agent, the content of a thickener and/or dispersant, and the average particle size of a negative electrode active material are adjusted to satisfy a predetermined formula, it is possible to impart sufficient strength to maintain the electrode shape and achieve a uniform reaction in the battery and excellent charge-discharge cycle characteristics. The present invention was accomplished as a result of further research based on the above findings. Specifically, the present invention encompasses the following.

Item 1.

A composition for forming a negative electrode active material layer for lithium ion secondary batteries, the composition comprising at least:

a negative electrode active material; and
a carbon nanotube,

wherein the composition satisfies the following formula (1): $2.15\,M_1 + 0.00454\,(M_2 \times D^2) + 6.54 \leq 7.40$ (1)
wherein $M_1$ represents the content of a binding agent (mass%); $M_2$ represents the content of a thickener and/or dispersant (mass%); and D represents an average particle size ($\mu$m) of the negative electrode active material.

Item 2.

The composition for forming a negative electrode active material layer for lithium ion secondary batteries according to Item 1,

wherein, based on the total amount of the composition taken as 100 mass%,

the content of the negative electrode active material is 96.6 to 99.9 mass%,
the content of the carbon nanotube is 0.01 to 1.4 mass%,
the content of a negative electrode constituent material other than the negative electrode active material and the carbon nanotube is 0 to 2.0 mass%, and
the average particle size of the negative electrode active material is 0.1 to 30.0 $\mu$m.

Item 3.

The composition for forming a negative electrode active material layer for lithium ion secondary batteries according to Item 1 or 2, wherein the negative electrode active material is a material capable of absorbing and releasing lithium ions.

Item 4.

The composition for forming a negative electrode active material layer for lithium ion secondary batteries according to any one of Items 1 to 3, wherein the carbon nanotube is a single-walled carbon nanotube.

Item 5.

The composition for forming a negative electrode active material layer for lithium ion secondary batteries according to any one of Items 1 to 4, which is for use to reduce uneven reaction distribution in a lithium ion secondary battery.

Item 5-1.

Use of the composition for forming a negative electrode active material layer for lithium ion secondary batteries according to any one of Items 1 to 4 for reducing uneven reaction distribution in a lithium ion secondary battery.
Item 6. The composition for forming a negative electrode active material layer for lithium ion secondary batteries according to any one of Items 1 to 5, which is for a lithium ion secondary battery for use in an electric vehicle for car sharing.

Item 6-1.

Use of the composition for forming a negative electrode active material layer for lithium ion secondary batteries according to any one of Items 1 to 5 in a lithium ion secondary battery for use in an electric vehicle for car sharing.

Item 7.

A negative electrode active material layer for lithium ion secondary batteries, comprising the composition for forming a negative electrode active material layer for lithium ion secondary batteries according to any one of Items 1 to 6.

Item 8.

The negative electrode active material layer for lithium ion secondary batteries according to Item 7, which is for a lithium ion secondary battery for use in an electric vehicle for car sharing.

Item 8-1.

Use of the negative electrode active material layer for lithium ion secondary batteries according to Item 7 in a lithium ion secondary battery for use in an electric vehicle for car sharing.

Item 9.

A negative electrode for lithium ion secondary batteries, comprising the negative electrode active material layer for lithium ion secondary batteries according to Item 7 or 8.

Item 10.

The negative electrode for lithium ion secondary batteries according to Item 9, which is for a lithium ion secondary battery for use in an electric vehicle for car sharing.

Item 10-1.

Use of the negative electrode for lithium ion secondary batteries according to Item 9 in a lithium ion secondary battery for use in an electric vehicle for car sharing.

Item 11.

A lithium ion secondary battery comprising the negative electrode for lithium ion secondary batteries according to Item 9 or 10.

Item 12.

The lithium ion secondary battery according to Item 11,

wherein a resistance DCR (0.3 s) attributable to reaction inhibition satisfies the following formula (3):

$$2.15\ M_1 + 0.00454\ (M_2 \times D^2) + 5.00 \leq DCR\ (0.3\ s) \leq 2.15\ M_1 + 0.00454\ (M_2 \times D^2) + 7.40 \qquad (3)$$

wherein $M_1$ represents the content of a binding agent (mass%); $M_2$ represents the content of a thickener and/or dispersant (mass%); and D represents an average particle size ($\mu$m) of the negative electrode active material, wherein the resistance DCR (0.3 s) is determined as below:

a state of charge (SOC) is defined according to the following formula (2):
SOC (%) = Remaining capacity (Ah)/Full charge capacity (Ah) $\times$ 100 (2),
a voltage rise during pause is measured after discharging from an SOC of 100% to an SOC of 90% at 25°C and 3.0 C and then pausing for 10 minutes; and
from the measured voltage rise, the reaction resistance is separated into two components, i.e., resistance DCR (0.3 s) attributable to reaction inhibition and resistance DCR (0.3 s - 10 min) attributable to ion transport inhibition, to calculate the resistance DCR (0.3 s).

Item 13. The lithium ion secondary battery according to Item 11 or 12 for use in an electric vehicle for car sharing.
Item 13-1. Use of the lithium ion secondary battery according to Item 11 or 12 in an electric vehicle for car sharing.

Advantageous Effects of Invention

According to the present invention, the content of a binding agent, the content of a thickener and/or dispersant, and the average particle size of a negative electrode active material are adjusted to satisfy a predetermined formula, resulting in sufficient strength to maintain the electrode shape, a uniform reaction in the battery, and excellent charge-discharge cycle characteristics.

Brief Description of Drawings

Fig. 1 is a schematic diagram showing the direction of development of lithium ion batteries while bearing in mind the worldview that the use and operation of vehicles will significantly change.
Fig. 2 is a diagram showing an outline of a method for analyzing resistance attributable to reaction inhibition in the high-load current rest method.

Fig. 3 a graph showing an outline of the analysis method used in AC impedance measurement in Test Example 1.

Fig. 4 is a graph showing the results of the AC impedance measurement in Test Example 1.

Fig. 5 is a correlation diagram between predicted values of reaction resistance DCR (0.3 s) from a calculation formula and experimental values of DCR (0.3 s) in Test Example 2.

Description of Embodiments

In the present specification, the terms "comprise," "contain," and "include" encompass the concepts of comprising, consisting essentially of, and consisting of.

In the present specification, the range indicated by "A to B" means A or more and B or less.

1. Composition for Forming a Negative Electrode Active Material Layer for Lithium Ion Secondary Batteries

In general, a negative active material layer in a negative electrode often contains, in addition to a negative electrode active material, a considerable amount of negative electrode constituent materials other than the negative electrode active material, such as binders (binding agents, thickeners, dispersants, etc.). The negative electrode constituent materials other than the negative electrode active material are substances impermeable to lithium ions. Therefore, if the composition contains a considerable amount of negative electrode constituent materials other than the negative electrode active material, the transport of lithium ions is inhibited, interfering with uniform charge and discharge. When the transport of lithium ions is inhibited, the reaction is concentrated in areas where the transport of lithium ions is less inhibited. As a result, in negative electrodes, lithium electrodeposition is induced. Meanwhile, simply reducing the amount of negative electrode constituent materials other than the negative electrode active material does not allow retention of sufficient strength to maintain the negative electrode shape. Therefore, during charge and discharge, expansion and contraction occur and the electrode structure breaks down, which results in current collection degradation, such as reduced conductivity in the electrode, thereby reducing cycle characteristics and life characteristics of the battery. Accordingly, simply reducing the amount of negative electrode constituent materials other than the negative electrode active material is not sufficient to achieve the reduction of uneven reaction distribution as well as the improvement of cycle characteristics and life characteristics. In positive electrodes, reducing the amount of positive electrode constituent materials other than the positive electrode active material does not interfere with functions. However, in negative electrodes, as described above, the negative electrode structure breaks down, which results in current collection degradation, such as reduced conductivity in the negative electrode, thereby reducing life characteristics of the battery. Therefore, it was common technical knowledge that the amount of negative electrode constituent materials other than the negative electrode active material cannot be significantly reduced. In addition, interfaces between particles of the negative electrode active material may change depending on the particle size of the negative electrode active material, which may increase the number of starting points for structural collapse. Thus, it was not possible to achieve both the reduction of uneven reaction distribution and the improvement of cycle characteristics and life characteristics by simply significantly reducing the amount of negative electrode constituent materials other than the negative electrode active material.

In contrast, the composition for forming a negative electrode active material layer for lithium ion secondary batteries of the present invention contains at least a negative electrode active material and a carbon nanotube, and satisfies the following formula (1):

$$2.15 \ M_1 + 0.00454 \ (M_2 \times D^2) + 6.54 \leq 7.40 \qquad (1)$$

wherein $M_1$ represents the content of a binding agent (mass%); $M_2$ represents the content of a thickener and/or dispersant (mass%); and D represents an average particle size ($\mu$m) of the negative electrode active material.

With the above structure, the content of the binding agent, the content of the thickener and/or dispersant, and the average particle size of the negative electrode active material are appropriately adjusted, resulting in a uniform reaction in the battery and significantly improved cycle characteristics and life characteristics, while retaining sufficient strength to maintain the electrode shape. That is, the composition for forming a negative electrode active material layer for lithium ion secondary batteries of the present invention can be used to reduce uneven reaction distribution in a lithium ion secondary battery.

(1-1) Negative Electrode Active Material

The negative electrode active material is not particularly limited. Materials that can be used as negative electrode active materials in lithium ion secondary batteries, i.e., materials capable of absorbing and releasing lithium ions, can be used. Examples include carbon materials, such as natural graphite, artificial graphite, and amorphous carbon; metal materials that can be alloyed with lithium, such as Si, Al, Sn, Pb, Zn, Bi, In, Mg, Ga, Si alloy, Sn alloy, and Al alloy; metal oxides capable of absorbing and releasing lithium ions, such as $SiO_x$ (0 < x < 2), $SnO_x$ (0 < x < 2), lithium titanium oxide composites ($Li_2TiO_3$ etc.), and vanadium oxides; and composite materials containing a metal material and a carbon material, such as Si-C composites and Sn-C composites. These negative electrode active materials can be used alone or in a combination of two or more. In particular, when a conductive material, such as a carbon material, is used as a negative electrode active material, the negative electrode active material can also function as a conducting material, and the content of substances that inhibit the transport of lithium ions can be particularly easily reduced.

The shape of the negative electrode active material is not particularly limited. The electrode active material can be in various shapes, such as spherical, scaly, lumpy, fibrous, whisker-shaped, fragmented, or like shapes. Negative electrode active materials of multiple shapes can also be used in combination. The spherical shape may be true spherical, elliptical, or like shapes.

In the composition for forming a negative electrode active material layer for lithium ion secondary batteries of the present invention, the content of the binding agent, the content of the thickener and/or dispersant, and the average particle size of the negative electrode active material are appropriately adjusted, resulting in a uniform reaction in the battery and significantly improved cycle characteristics and life characteristics, while retaining sufficient strength to maintain the electrode shape. Although it can be understood from the above formula (1) that a smaller average particle size of the negative electrode active material is preferable, the average particle size is preferably 0.1 to 30.0 $\mu$m, more preferably 0.5 to 20.0 $\mu$m, and even more preferably 1.0 to 13.0 $\mu$m for easily suppressing aggregation, reducing the flux of lithium ions per unit area, easily reducing reaction resistance, and easily improving cycle characteristics and life characteristics. When the composition for forming a negative electrode active material layer for lithium ion secondary batteries of the present invention contains no negative electrode constituent materials other than the negative electrode active material and the carbon nanotube (described later), the average particle size of the negative electrode active material has no particular impact. When the composition contains even a small amount of negative electrode constituent materials other than the negative electrode active material and the carbon nanotube (described later), the average particle size of the negative electrode active material is preferably 0.1 to 20.0 $\mu$m, more preferably 0.5 to 13.0 $\mu$m, and even more preferably 1.0 to 10.0 $\mu$m. The average particle size of the negative electrode active material is measured by the laser diffraction and scattering method.

In the composition for forming a negative electrode active material layer for lithium ion secondary batteries of the present invention, the content of the binding agent, the content of the thickener and/or dispersant, and the average particle size of the negative electrode active material are appropriately adjusted, resulting in a uniform reaction in the battery and significantly improved cycle characteristics and life characteristics, while retaining sufficient strength to maintain the electrode shape. To easily adjust these properties, the content of the negative electrode active material is preferably 96.6 to 99.9 mass%, more preferably 97.6 to 99.8 mass%, and even more preferably 98.2 to 99.7 mass%. When multiple negative electrode active materials are used, the total amount thereof is preferably adjusted to the range described above. In the composition for forming a negative electrode active material layer for lithium ion secondary batteries of the present invention, the total amount of the negative electrode active material, carbon nanotube, and electrode constituent materials other than the electrode active material and the carbon nanotube (the total amount of the composition) is 100 mass%.

(1-2) Carbon Nanotube

In the composition for forming a negative electrode active material layer for lithium ion secondary batteries of the present invention, the content of the binding agent, the content of the thickener and/or dispersant, and the average particle size of the negative electrode active material are appropriately adjusted, resulting in a uniform reaction in the battery and significantly improved cycle characteristics and life characteristics, while retaining sufficient strength to maintain the electrode shape. At the same time, for example, current between active material particles can be easily collected and the shape of the electrode can be easily maintained by means of a very small amount of carbon nanotube. Even if a reduction in the particle size of the negative electrode active material results in an increase in starting points for structural collapse due to an increase in interfaces between particles of the negative electrode active material, it is easy to impart sufficient strength to maintain the electrode shape, achieve a uniform reaction in the battery, and improve cycle characteristics and life characteristics, regardless of a reduction in the amount of negative electrode constituent materials other than the negative electrode active material.

Carbon nanotubes are a hollow carbon substance that includes a graphite sheet (i.e., a carbon atom surface of a graphite structure or a single-layer graphene sheet) closed into a tubular shape and that has a diameter in the nanometer-scale range, and whose wall structure is a graphite structure. Carbon nanotubes whose wall structure is a single-layer graphene sheet closed into a tubular shape are called "single-walled carbon nanotubes." In contrast, carbon nanotubes including a plurality of graphite sheets each closed into a tubular shape with one sheet being nested in another are called "nested multi-walled carbon nanotubes." In the present invention, both single-walled carbon nanotubes and nested multi-walled carbon nanotubes can be used. In contrast, carbon nanotubes including several graphite sheets each closed in a tubular shape with one sheet being nested in another are referred to as "nested multilayer carbon nanotubes." Although single-walled carbon nanotubes and multilayer carbon nanotubes can both be used in the present invention, single-walled carbon nanotubes are preferred for easily achieving a uniform reaction in the battery and easily extending battery life because single-walled carbon nanotubes can easily impart sufficient strength to maintain the negative electrode shape, easily collect current between negative electrode active material particles, and are less likely to inhibit the transport of lithium ions.

Such carbon nanotubes can be used alone or in a combination of two or more.

For easily increasing the number of carbon nanotubes per volume, reducing the content of the carbon nanotubes for maintaining the negative electrode shape, and being less likely to inhibit the transport of lithium ions, the carbon nanotubes to be used preferably have a smaller average outer diameter. Accordingly, the average outer diameter of the carbon nanotubes is preferably in the range of 0.43 to 20 nm, and more preferably 0.43 to 10 nm. The average outer diameter of the carbon nanotubes is measured by electron microscopy (TEM) observation. The average inner diameter of the carbon nanotubes having such an average outer diameter is set according to the average outer diameter.

The longer the average length of carbon nanotubes, the more easily they can impart sufficient strength to maintain the electrode shape and collect current between negative active material particles. Meanwhile, for easily improving dispersibility and being less likely to inhibit the transport of lithium ions, the carbon nanotubes preferably have a shorter average length. Accordingly, the average length of the carbon nanotubes is preferably in the range of 0.5 to 200 $\mu$m, and more preferably 1 to 50 $\mu$m. The average length of the carbon nanotubes is measured by electron microscopy (SEM) observation.

The average aspect ratio of the carbon nanotubes is defined as the ratio of the average length of the carbon nanotubes to the average outer diameter of the carbon nanotubes. The higher the average aspect ratio, the lower the content of the carbon nanotubes required to impart sufficient strength to maintain the electrode shape, the easier the current collection between negative active material particles is, and the less likely it is for the composition to inhibit the transport of lithium ions, thus easily achieving a uniform reaction in the battery and easily extending battery life. From these viewpoints, the average aspect ratio is preferably 25 to 200000, and more preferably 100 to 50000.

The carbon nanotube used in the present invention can be carbon nanotubes independent from each other, or a carbon nanotube aggregate including several carbon nanotubes bundled together to easily exhibit high strength as a bundle. Regardless of whether either of the above carbon nanotubes is used, current collection between active material particles and maintenance of the negative electrode shape can be easily carried out, and the amount of negative electrode constituent materials other than the negative electrode active material can be reduced. As a result, the composition has sufficient strength to maintain the negative electrode shape, and the transport of lithium ions is less likely to be inhibited. Thus, the composition tends to achieve a uniform reaction in the battery and extend battery life.

For suppressing the reactivity between the carbon nanotube and electrolytes, it is considered preferable that there are fewer defects in the carbon nanotube graphene structure, i.e., that the G/D ratio in the Raman spectrum is higher. Therefore, in the present invention, the G/D ratio of the carbon nanotube is preferably in the range of 1 to 200, and more preferably 50 to 150 in the Raman spectrum.

In the composition for forming a negative electrode active material layer for lithium ion secondary batteries of the present invention, the content of the binding agent, the content of the thickener and/or dispersant, and the average particle size of the negative electrode active material are appropriately adjusted, resulting in a uniform reaction in the battery and significantly improved cycle characteristics and life characteristics, while retaining sufficient strength to maintain the electrode shape. At the same time, for example, current between active material particles can be easily collected and the shape of the electrode can be easily maintained by means of a very small amount of carbon nanotubes. Even if a reduction in the particle size of the negative electrode active material results in an increase in starting points for structural collapse due to an increase in interfaces between particles of the negative electrode active material, it is easy to impart sufficient strength to maintain the electrode shape, achieve a uniform reaction in the battery, and improve cycle characteristics and life characteristics, regardless of a reduction in the amount of negative electrode constituent materials other than the negative electrode active material. To easily adjust these properties, the content of the carbon nanotubes in the composition for forming an electrode active material layer for lithium ion secondary batteries is preferably 0.01 to 1.4 mass%, more preferably 0.1 to 1.2 mass%, and even more preferably 0.2 to 1.0 mass%. When multiple carbon nanotubes are used, the total amount of the carbon nanotubes is preferably within the range described above. In the composition for forming a negative electrode active material layer for lithium ion secondary batteries of the present invention, the total amount of the negative electrode active material, carbon nanotubes, and negative electrode constituent materials other than the negative electrode active material and the carbon nanotubes (the total amount of the composition) is 100 mass%.

(1-3) Negative Electrode Constituent Materials Other Than the Negative Electrode Active Material and the Carbon Nanotube

In the composition for forming a negative electrode active material layer for lithium ion secondary batteries of the present invention, the content of the binding agent, the content of the thickener and/or dispersant, and the average particle size of the negative electrode active material are appropriately adjusted, resulting in a uniform reaction in the battery and significantly improved cycle characteristics and life characteristics, while retaining sufficient strength to maintain the electrode shape.

In the present invention, negative electrode constituent materials other than the negative electrode active material and the carbon nanotube are a generic concept that includes: substances having adhesion to a negative electrode active material or a negative electrode current collector (binding agents); conductive materials other than carbon nanotubes, such as carbon black; and substances that inhibit the transport of lithium ions other than carbon nanotubes (lithium ion transport inhibitors), such as thickeners and dispersants.

Such negative electrode constituent materials other than the negative electrode active material and the carbon nanotube in the present invention include, for example, the following materials. Examples of conductive materials include carbon black such as acetylene black, furnace black, Ketjen black, and carbon black; flake graphite; graphene, and amorphous carbon obtained by heat-treating an organic material. A binding agent is used as an emulsion during production of an electrode slurry, and examples thereof include polyolefin resins (styrenebutadiene copolymer resins, ethylene-vinyl alcohol copolymer resins, etc.), synthetic rubbers (styrene butadiene rubber, acrylonitrile butadiene rubber, ethylene propylene diene rubber, etc.), and acrylic resins. A thickener or dispersant is used as a solution during production of an electrode slurry, and has a thickening function or a dispersion function. Examples thereof include fluorinated polymers (polyvinylidene fluoride resins, polytetrafluoroethylene resins, vinylidene fluoride-hexafluoropropylene copolymers, etc.), polyamide, polyimide, polyacrylic acid, polyacrylic acid esters, polyvinyl ethers, carboxymethyl cellulose, carboxymethyl cellulose sodium salts, carboxymethyl cellulose ammonium, hydroxypropyl cellulose, hydroxyethyl cellulose, and methyl cellulose. These negative electrode constituent materials other than the negative electrode active material and the carbon nanotube can be used alone or in a combination of two or more.

In the composition for forming a negative electrode active material layer for lithium ion secondary batteries of the present invention, the content of the binding agent, the content of the thickener and/or dispersant, and the average particle size of the negative electrode active material are appropriately adjusted, resulting in a uniform reaction in the battery and significantly improved cycle characteristics and life characteristics, while retaining sufficient strength to maintain the electrode shape. While it can be understood from the above formula (1) that a smaller content of the binding agent and a smaller content of the thickener and/or dispersant are preferable, since the content of the negative electrode constituent materials other than the negative electrode active material and the carbon nanotube is also relevant, the composition preferably contains no negative electrode constituent materials other than the negative electrode active material and the carbon nanotube, or, if it does, the content thereof is preferably small.

Accordingly, in the composition for forming a negative electrode active material layer for lithium ion secondary batteries of the present invention, the content of negative electrode constituent materials other than the negative electrode active material and the carbon nanotube is preferably 0 to 2.0 mass%, more preferably 0 to 1.6 mass%, and even more preferably 0 to 1.2 mass%. When multiple negative electrode constituent materials other than the negative electrode active material and the carbon nanotube are used, the total amount of the negative electrode active materials is preferably adjusted to the range described above. In the composition for forming a negative electrode active material layer for lithium ion secondary batteries of the present invention, the total amount of the negative electrode active material, carbon nanotube, and negative electrode constituent materials other than the electrode active material and the carbon nanotube (the total amount of the composition) is 100 mass%.

In the composition for forming a negative electrode active material layer for lithium ion secondary batteries of the present invention, the content of the binding agent is preferably 0 to 0.6 mass%, more preferably 0 to 0.4 mass%, still more preferably 0 to 0.2 mass%. When multiple binding agents are used, the total amount thereof is preferably adjusted to the range described above. In the composition for forming a negative electrode active material layer for lithium ion secondary batteries of the present invention, the total amount of the negative electrode active material, carbon nanotube, and negative electrode constituent materials other than the electrode active material and the carbon nanotube (the total amount of the composition) is 100 mass%.

In the composition for forming a negative electrode active material layer for lithium ion secondary batteries of the present invention, the content of the thickener and/or dispersant is preferably 0 to 1.4 mass%, more preferably 0 to 1.2 mass%, and even more preferably 0 to 1.0 mass%. When multiple thickeners and/or dispersants are used, the total amount thereof is preferably adjusted to the range described above. In the composition for forming a negative electrode active material layer for lithium ion secondary batteries of the present invention, the total amount of the negative electrode active material, carbon nanotube, and negative electrode constituent materials other than the electrode active material and the carbon nanotube (the total amount of the composition) is 100 mass%.

(1-4) Composition for Forming a Negative Electrode Active Material Layer for Lithium Ion Secondary Batteries

As described above, the composition for forming a negative electrode active material layer for lithium ion secondary batteries of the present invention contains a negative electrode active material, a carbon nanotube, and optionally negative electrode constituent materials other than the negative electrode active material and the carbon nanotube. The content of a binding agent and the content of a thickener and/or dispersant among the optional negative electrode constituent materials, and the average particle size of the negative electrode active material are appropriately adjusted, resulting in a uniform reaction in the battery and significantly improved cycle characteristics and life characteristics, while retaining sufficient strength to maintain the electrode shape.

Specifically, preferably, the following formula (1) is satisfied:

$$2.15\ M_1 + 0.00454\ (M_2 \times D^2) + 6.54 \leq 7.40 \quad (1)$$

wherein $M_1$ represents the content of the binding agent (mass%); $M_2$ represents the content of the thickener and/or dispersant (mass%); and D represents an average particle size ($\mu$m) of the negative electrode active material. More preferably, the following formula (1A) is satisfied:

$$5.00 \leq 2.15\ M_1 + 0.00454\ (M_2 \times D^2) + 6.54 \leq 7.20 \quad (1A).$$

Even more preferably, the following formula (1A1) is satisfied:

$$5.00 \leq 2.15\ M_1 + 0.00454\ (M_2 \times D^2) + 6.54 \leq 7.00 \quad (1A1).$$

In the composition for forming a negative electrode active material layer for lithium ion secondary batteries of the present invention, when a negative electrode active material, a carbon nanotube, and, optionally, negative electrode constituent materials other than the negative electrode active material and the carbon nanotube, are mixed to produce a paste composition for forming a negative electrode active material layer for lithium ion secondary batteries, the mixture can be formed into a paste by incorporating one or more solvents such as water, alcohols (methanol, ethanol, n-propyl alcohol, isopropyl alcohol, etc.), acetone, N-methylpyrrolidone, dimethylsulphoxide, dimethylformamide, and like organic solvents. In this case, the content of each component is indicated by a numerical value calculated based on the total amount of the negative electrode active material, carbon nanotube, and negative electrode constituent materials other than the electrode active material and the carbon nanotube, i.e., the total solids content, taken as 100 mass%.

The composition for forming a negative electrode active material layer for lithium ion secondary batteries of the present invention may be produced by any method. For example, the composition for forming a negative electrode active material layer for lithium ion secondary batteries of the present invention can be produced by mixing the above components by a usual method. Mixing can be performed by mixing all of the components simultaneously or sequentially.

2. Negative Electrode Active Material Layer for Lithium Ion Secondary Batteries

The negative electrode active material layer for lithium ion secondary batteries of the present invention contains the composition for forming a negative electrode active material layer for lithium ion secondary batteries of the present invention.

The negative electrode active material layer for lithium ion secondary batteries of the present invention may have any thickness. While a thinner electrode active material layer is better for ensuring lithium ion penetration and electrical conductivity to facilitate a uniform reaction, since the present invention is aimed at achieving a uniform reaction in the battery to improve cycle characteristics and life characteristics, it is also possible to increase the thickness of the layer for energy density per electrode. Thus, the thickness of the negative electrode active material layer for lithium ion secondary batteries of the present invention is preferably 1 to 300 $\mu$m, more preferably 10 to 150 $\mu$m, and even more preferably 50 to 100 $\mu$m.

The negative electrode active material layer for lithium ion secondary batteries of the present invention can be produced by molding the composition for forming a negative electrode active material layer for lithium ion secondary batteries of the present invention into a layer. For example, when the composition for forming a negative electrode active material layer for lithium ion secondary batteries of the present invention is obtained as a paste composition for forming a negative electrode active material layer for lithium ion secondary batteries, the paste composition can be dried and molded into a layer by a usual method.

3. Negative Electrode for Lithium Ion Secondary Batteries

The negative electrode for lithium ion secondary batteries of the present invention includes the negative electrode active material layer for lithium ion secondary batteries of the present invention described above. Specifically, it preferably includes a negative electrode current collector and the negative electrode active material layer for lithium ion secondary batteries of the present invention disposed on the negative electrode current collector.

The negative electrode current collector is preferably made of a material that is electrochemically stable at the electric potential used and that has high electronic conductivity, such as copper, stainless steel, nickel, or a carbon material. The negative electrode current collector may be, for example, a foil-shaped or mesh-shaped component.

The negative electrode for lithium ion secondary batteries of the present invention can be produced by molding the composition for forming a negative electrode active material layer for lithium ion secondary batteries of the present invention described above into a layer, on the negative electrode current collector. For example, when the composition for forming a negative electrode active material layer for lithium ion secondary batteries of the present invention is obtained as a paste composition for forming a negative electrode active material layer for lithium ion secondary batteries, the negative electrode for lithium ion secondary batteries of the present invention can be produced by drying and molding the paste composition into a layer by a usual method on the negative electrode current collector.

4. Lithium Ion Secondary Battery

The lithium ion secondary battery of the present invention includes the negative electrode for lithium ion secondary batteries of the present invention described above. The lithium ion secondary battery of the present invention can also include, in addition to the negative electrode for lithium ion secondary batteries of the present invention, a positive electrode, an electrolyte, and a container for housing these components, which are applied to known lithium ion secondary batteries.

The positive electrode may be any positive electrode that can supply lithium ions to the negative electrode, and a well-known positive electrode can be used.

A positive electrode current collector constituting the positive electrode may be, for example, a material that is electrochemically stable at the electric potential used and that has high electronic conductivity, such as aluminum, stainless steel, or a carbon material.

The positive electrode active material constituting the positive electrode may generally be a material capable of absorbing and releasing lithium ions. Examples include lithium transition metal composite oxides having an $\alpha$-NaFeO$_2$-type crystal structure, lithium transition metal oxides having a spinel-type crystal structure, polyanionic compounds, chalcogen compounds, and sulfur. Examples of lithium transition metal composite oxides having an $\alpha$-NaFeO$_2$-type crystal structure include Li[Li$_{x1}$Ni$_{y1}$Mn$_{\beta1}$Co$_{(1-x1-\gamma1-\beta1)}$]O$_2$ ($0 \leq x1 < 0.5$, $0 \leq \gamma1 \leq 1$, $0 \leq \beta1 \leq 1$, $0 \leq \gamma1 + \beta1 \leq 1$), Li[Li$_{x2}$Ni$_{y2}$CO$_{\beta2}$Al$_{(1-x2-\gamma2-\beta2)}$]O$_2$ ($0 \leq x2 < 0.5$, $0 \leq \gamma2 \leq 1$, $0 \leq \beta2 \leq 1$, $0 \leq \gamma2 + \beta2 \leq 1$), and the like. Examples of lithium transition metal oxides having a spinel-type crystal structure include Li$_{x3}$Mn$_2$O$_4$ ($0.9 \leq x3 < 1.5$) and Li$_{x4}$Ni$_{y4}$Mn$_{(2-\gamma4)}$O$_4$ ($0.9 \leq x4 < 1.5$, $0 \leq \gamma4 \leq 2$). Examples of polyanionic compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of chalcogen compounds include titanium disulfide, molybdenum disulfide, and molybdenum dioxide. Atoms or polyanions in these materials may be partially replaced by atoms or anion species composed of other elements. These positive electrode active materials can be used alone or in a combination of two or more. Among the positive electrode active materials described above, lithium transition metal composite oxides are preferable in terms of high energy density.

Positive electrode constituent materials, other than the positive electrode active material, that constitute the positive electrode, may be the same as the negative electrode constituent materials other than the negative electrode active material, and the carbon nanotube in the negative electrode described above can be used. The content thereof may also be the same as that of negative electrode constituent materials other than the negative electrode active material and the carbon nanotube in the negative electrode.

Preferably, the electrolyte is an electrolyte in which a salt is dissolved in an aprotic organic solvent, which is placed between the positive electrode and the negative electrode, and which is impregnated and held into a separator made of a nonwoven fabric or the like to, for example, prevent a short circuit between the positive electrode and the negative electrode.

Examples of the aprotic organic solvent constituting the electrolyte include esters, such as ethylene carbonate, propylene carbonate, butylene carbonate, dimethyl carbonate, diethyl carbonate, methyl ethyl carbonate, $\gamma$-butyrolactone, methyl formate, and methyl acetate; furans, such as tetrahydrofuran and 2-methyltetrahydrofuran; ethers, such as dioxolane, diethyl ether, dimethoxyethane, diethoxyethane, and methoxyethoxyethane; dimethyl sulfoxide; sulfolanes, such as sulfolane and methylsulfolane; acetonitrile; and the like. These aprotic organic solvents can be used alone or in a combination of two or more.

Examples of the salt dissolved in such an aprotic organic solvent include lithium salts, such as lithium perchlorate, lithium tetrafluoroborate, lithium hexafluorophosphate, lithium hexafluoroarsenate, lithium trifluoromethanesulfonate, lithium halide, lithium tetrachloroaluminate, and lithium bis(fluorosulfonyl)imide. These salts can be used alone or in a combination of two or more.

In the lithium ion secondary battery of the present invention described above, the resistance DCR (0.3 s) attributable to reaction inhibition can be evaluated as follows.

First, the state of charge SOC is defined according to the following formula (2):

$$SOC (\%) = \text{Remaining capacity (Ah)/Full charge capacity (Ah)} \times 100 \quad (2) ;$$

and a voltage rise during pause is measured after discharging from an SOC of 100% to an SOC of 90% at 25°C and 3.0 C, and then pausing for 10 minutes.

As described above, uneven reaction distribution can be easily evaluated by setting conditions in which uneven reaction distribution is likely to occur. Thus, the discharge rate is set to 3.0 C, which is a high-load condition at 25°C.

The SOC at the start of discharge is set to 100% for the purpose of ensuring that the state before measurement is a state in which no uneven reaction distribution occurs by allowing the negative electrode to absorb lithium ions sufficiently.

After discharge under these conditions, the reaction is paused, which causes a voltage rise. The time until saturation varies depending on the temperature and discharge rate conditions. For example, the pause time can be set to 10 minutes when the discharge rate is 3.0 C.

As shown in Fig. 2, a voltage rise attributable to reaction inhibition, which is observed at the very beginning of the pause, and a voltage rise attributable to ion transport inhibition, which is observed thereafter, are detected as the voltage rise observed during the pause. The voltage rise attributable to reaction inhibition represents uneven reaction distribution at the particle level. Such a rise is observed due to uneven reaction distribution caused by the presence of reaction inhibition factors such as negative electrode constituent materials other than the negative electrode active material and the carbon nanotube. The voltage rises suddenly at the very beginning of the pause. The voltage rise attributable to ion transport inhibition represents uneven reaction distribution at the structural level. Such a rise is observed due to uneven reaction distribution caused by the presence of ion transport inhibition factors such as negative electrode constituent materials other than the negative electrode active material and the carbon nanotube during lithium ion transport. A phenomenon is observed in which the voltage rise gradually becomes less pronounced at any time other than the very beginning of the pause.

From the above, it is possible to measure the voltage rise attributable to reaction inhibition, and the resistance attributable to reaction inhibition is calculated from the following formula (3):

Resistance DCR (0.3 s) attributable to reaction inhibition = (Voltage rise (V) attributable to reaction inhibition/ Current value (A) during discharge) × Facing area (cm²) between positive electrode and negative electrode (3).

As a result, when the value of the resistance attributable to reaction inhibition is large, the degree of uneven reaction distribution can be evaluated as being large, and cycle characteristics and life characteristics can be evaluated as being poor. When the value of the resistance attributable to reaction inhibition is small, the degree of uneven reaction distribution can be evaluated as being small, cycle characteristics can be evaluated as being excellent, and the life can be evaluated as being extended.

Specifically, when the composition for forming a negative electrode active material layer for lithium ion secondary batteries of the present invention is used, the resistance attributable to reaction inhibition calculated as described above at 25°C and 3.0 C is preferably 7.40 Ω·cm² or less, more preferably 5.00 to 7.20 Ω·cm², and even more preferably 5.00 to 7.00 Ω·cm².

As a result of the present inventors' research, the thus-obtained DCR (0.3 s) was found to often take a value similar to $2.15 M_1 + 0.00454 (M_2 \times D^2) + 6.54$. Thus, the lithium ion secondary battery of the present invention preferably satisfies the following formula (3):

$$2.15 M_1 + 0.00454 (M_2 \times D^2) + 5.00 \leq DCR (0.3 s) \leq 2.15 M_1 + 0.00454 (M_2 \times D^2) + 7.40 \quad (3)$$

wherein $M_1$ represents the content of the binding agent (mass%); $M_2$ represents the content of the thickener and/or dispersant (mass%); and D represents an average particle size (μm) of the negative electrode active material.

More preferably, the lithium ion secondary battery of the present invention satisfies the following formula (3A):

$$2.15 M_1 + 0.00454 (M_2 \times D^2) + 5.00 \leq DCR (0.3 s) \leq 2.15 M_1 + 0.00454 (M_2 \times D^2) + 7.20 \quad (3A)$$

wherein $M_1$ represents the content of the binding agent (mass%); $M_2$ represents the content of the thickener and/or dispersant (mass%); and D represents an average particle size ($\mu$m) of the negative electrode active material. Even more preferably, the lithium ion secondary battery of the present invention satisfies the following formula (3A1):

$$2.15\ M_1 + 0.00454\ (M_2 \times D^2) + 5.00 \leq DCR\ (0.3\ s) \leq 2.15\ M_1 + 0.00454\ (M_2 \times D^2) + 7.00 \qquad (3A1)$$

wherein $M_1$ represents the content of the binding agent (mass%); $M_2$ represents the content of the thickener and/or dispersant (mass%); and D represents an average particle size ($\mu$m) of the negative electrode active material.

In the charge process described above to bring the SOC to 100%, charging at 3.0 C, which is a high-load condition, may cause electrodeposition of lithium ions in the negative electrode, as described above. Thus, preferably, charge is not performed under a high-load condition. The temperature is preferably 20°C or higher, at which the resistance is reduced. In addition, since the purpose is to achieve a state before measurement in which uneven reaction distribution is prevented by allowing the negative electrode to absorb lithium ions sufficiently, it is preferable to perform constant current, constant voltage charge (CCCV charge) to an upper-limit voltage corresponding to an SOC of 100% in the charge process to bring the SOC to 100% described above. The charge rate is preferably 0.01 to 1.0 C, and more preferably 0.01 to 0.75 C. As described above, the lower limit of the charge rate is preferably 0.01 C, but can be, for example, 0.02 C or 0.03 C.

The lithium ion secondary battery of the present invention includes the composition for forming a negative electrode active material layer for lithium ion secondary batteries of the present invention in the negative electrode. Thus, when the content of the binding agent, the content of the thickener and/or dispersant, and the average particle size of the negative electrode active material are appropriately adjusted, this results in a uniform reaction in the battery and significantly improved cycle characteristics and life characteristics, while retaining sufficient strength to maintain the electrode shape. Thus, the lithium ion secondary battery can be effectively used in electric vehicle applications for car sharing, which are expected to expand in the market in the future and will require extended life, particularly for artificial intelligence electric vehicles (AIEVs).

Examples

The present invention is described in detail below with reference to Examples; however, the present invention is not limited to these Examples.

Examples 1 to 5 and Comparative Examples 1 to 5

According to the formulations shown in Table 1, graphite particles as a negative electrode material, single-walled carbon nanotubes (bundled single-walled CNT aggregate; average outer diameter: 2 nm, average length: >5 $\mu$m; G/D: 80 to 150, per single-walled CNT), carboxymethyl cellulose (CMC) and styrene butadiene (SBR) as other negative electrode constituent materials, and an appropriate amount of water were added and kneaded to prepare slurries. Each slurry was individually applied to the copper foil described above with a doctor blade such that the weight per unit area of the negative electrode active material layer after drying would be 10.3 to 10.9 mg/cm$^2$, dried at 80°C, roll-pressed such that the density of the negative electrode active material layer would be 1.3 g/cm$^3$, and dried under reduced pressure at 120°C to obtain a negative electrode. The graphite particles were particles of spherical artificial graphite (average particle size: 25.0 $\mu$m), coated natural graphite (average particle size 17.0 $\mu$m), coated natural graphite (average particle size: 12.0 $\mu$m), or coated natural graphite (average particle size: 5.0 $\mu$m).

Examples 6 to 9

According to the formulations shown in Table 1, graphite particles as a negative electrode active material, single-walled carbon nanotubes (a bundled single-walled CNT aggregate; average outer diameter: 2 nm; average length: >5 $\mu$m, G/D: 80 to 150, per single-walled CNT), and an appropriate amount of NMP were added and kneaded to prepare slurries. Each slurry was individually applied to the copper foil described above with a doctor blade such that the weight per unit area of the negative electrode active material layer after drying would be 10.3 to 10.9 mg/cm$^2$, dried at 80°C, roll-pressed such that the density of the negative electrode active material layer would be 1.3 g/cm$^3$, and dried under reduced pressure at 170°C to obtain a negative electrode. The graphite particles were particles of spherical artificial graphite (average particle size: 25.0 $\mu$m), coated natural graphite (average particle size: 17.0 $\mu$m), coated natural graphite (average particle size: 12.0 $\mu$m), or coated natural graphite (average particle size: 5.0 $\mu$m).

Table 1 shows the formulations of the Examples and the Comparative Examples.

[Table 1]

| | Graphite | | Single-walled CNT (Mass%) | CMC (Mass%) | SBR (Mass%) | Total amount excluding active material and CNT |
|---|---|---|---|---|---|---|
| | Content (Mass%) | Average particle size (μm) | | | | |
| Com. Ex. 1 | 97.50 | 17. 0 | - | 1. 00 | 1.50 | 2.50 |
| Com. Ex. 2 | 97.50 | 5. 0 | - | 1. 00 | 1.50 | 2.50 |
| Com. Ex. 3 | 98.00 | 5. 0 | 0.50 | 1. 50 | - | 1. 50 |
| Com. Ex. 4 | 98. 50 | 25.0 | 0.50 | 1.00 | - | 1.00 |
| Com. Ex. 5 | 99.00 | 25.0 | 0.50 | 0.50 | - | 0. 50 |
| Example 1 | 98. 50 | 5. 0 | 0.50 | 1. 00 | - | 1.00 |
| Example 2 | 99. 50 | 17.0 | 0.50 | 0. 50 | - | 0.50 |
| Example 3 | 99.50 | 5.0 | 0.50 | 0.50 | - | 0. 50 |
| Example 4 | 99.17 | 17.0 | 0.5 0 | 0.33 | - | 0.3 3 |
| Example 5 | 99. 33 | 17.0 | 0.50 | 0.17 | - | 0.17 |
| Example 6 | 99. 50 | 17.0 | 0.5 0 | - | - | 0.00 |
| Example 7 | 99.50 | 12.0 | 0.5 0 | - | - | 0.00 |
| Example 8 | 99.50 | 5. 0 | 0.50 | - | - | 0.00 |
| Example 9 | 99. 50 | 25. 0 | 0.50 | - | - | 0.00 |

Production Example: Production of Lithium Ion Secondary Batteries

Each of the negative electrodes obtained in Examples 1 to 9 and Comparative Examples 1 to 5 was used as a negative electrode.

Based on the total weight of the positive electrode composition, 92.0 mass% of $LiNi_{0.8}Co_{0.15}Al_{0.05}O_2$ (NCA; average particle size: 6 μm) as a positive electrode active material, 4.0 mass % of polyvinylidene fluoride (PVdF) and 4.0 mass% of acetylene black as other positive electrode constituent materials, and an appropriate amount of N-methyl-2-pyrrolidone (NMP) were added and kneaded to prepare a slurry. The slurry was applied to aluminum foil (thickness: 17 μm) with a doctor blade such that the mass per unit area of the positive electrode active material layer after drying would be 20.05 to 21.29 mg/cm$^2$, dried at 100°C, roll-pressed such that the density of the positive electrode active material layer would be 3.0 g/cm$^3$, and dried under reduced pressure at 170°C to obtain a positive electrode.

The electrolyte used was composed of a mixture of ethylene carbonate (EC) and methyl ethyl carbonate (MEC) at a volume ratio of 3:7 as a solvent and 1 mol/L of lithium hexafluorophosphate (LiPF$_6$) as a salt. The electrolyte was impregnated into a porous polyethylene film as a separator.

Lithium ion secondary batteries composed of the negative electrode, the positive electrode, the electrolyte, and the separator were produced. The facing area between the positive and negative electrodes of the produced lithium ion secondary batteries was 2.8 cm$^2$.

Test Example 1: Measurement of Reaction Resistance

Each of the lithium ion secondary batteries of the Examples and the Comparative Examples was subjected to measurement of the resistance to the following charge-discharge reaction of the graphite negative electrode active material:

$$Li^+ + 6C + e^- \leftrightarrows LiC_6$$

,

and
for that purpose, AC impedance measurement, which is a common method of measuring reaction resistance, was performed.

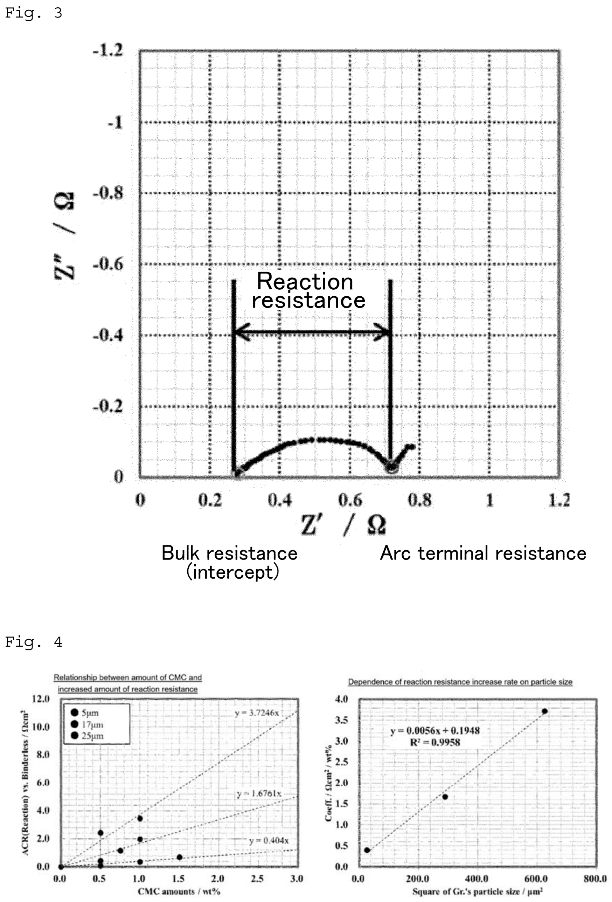

The reaction resistance was analyzed by defining the smallest intercept on the Z'-axis in the Nyquist plot as the bulk resistance, and subtracting the bulk resistance from the resistance value at the arc terminal to obtain the reaction resistance. The measurement was performed under the following conditions: 25°C; state of charge (SOC): 100% based on the cell voltage; amplitude: 10 mV; and frequency: 500 kHz to 0.1 Hz. Fig. 3 shows an outline of the analysis method in the AC impedance measurement.

The reaction resistance was measured using each of the negative electrodes obtained in Examples 6 to 9. The reaction resistance was 3.61 $\Omega$ cm$^2$ in Example 6, 3.56 $\Omega$ cm$^2$ in Example 7, 3.88 $\Omega$ cm$^2$ in Example 8, and 3.69 $\Omega$ cm$^2$ in Example 9. There was not much difference. The reaction resistance generally evaluated is an index that does not include the effect of uneven reaction distribution, and it is expected to be difficult to evaluate uneven reaction distribution by measuring general electrode resistance.

Fig. 4 shows the results obtained by similarly measuring the reaction resistance using each of the negative electrodes obtained in the Examples and the Comparative Examples. It can be inferred from these results that the reaction resistance is proportional to the amount of CMC, i.e., the content of the thickener and/or thickener and is proportional to the square of the average particle size of the graphite, i.e., the negative electrode active material. A detailed analysis was performed in Test Example 2 below.

Test Example 2: Internal Resistance under High-Load Condition

For each of the lithium ion secondary batteries of the Examples and the Comparative Examples, the resistance attributable to reaction inhibition was calculated by the high-load current rest method at room temperature (25°C) to investigate the degree of uneven reaction distribution.

Specifically, the lithium ion secondary batteries including the respective negative electrodes of the Examples and the Comparative Examples were subjected to constant current, constant voltage charge (CCCV charge) to an upper-limit voltage of 4.0 V, which corresponds to an SOC of 100%, at room temperature (25°C), under the conditions of a charge rate of 0.5 C and a cut-off current of 0.05 C, followed by a 10-minute pause. Thereafter, discharge was performed to an SOC of 90% (for 2 minutes) at a discharge rate of 3.0 C, followed by a 10-minute pause. The state of charge (SOC) is defined according the following formula (2):

$$SOC\ (\%) = Remaining\ capacity\ (Ah)/Full\ charge\ capacity\ (Ah) \times 100$$

$$(2).$$

As shown in Fig. 2, a voltage rise attributable to reaction inhibition, which is observed at the very beginning of the pause, and a voltage rise attributable to ion transport inhibition, which is observed thereafter, are detected as the voltage rise observed during the pause. The voltage rise attributable to reaction inhibition represents uneven reaction distribution at the particle level. Such a rise is observed due to uneven reaction distribution caused by the presence of reaction inhibition factors such as negative electrode constituent materials other than the negative electrode active material and the carbon nanotube. The voltage rises suddenly at the very beginning of the pause. The voltage rise attributable to ion transport inhibition represents uneven reaction distribution at the structural level. Such a rise is observed due to uneven reaction distribution caused by the presence of ion transport inhibition factors such as negative electrode constituent materials other than the negative electrode active material and the carbon nanotube during lithium ion transport. A phenomenon is observed in which the voltage rise gradually becomes less pronounced at any time other than the very beginning of the pause.

From the above, the voltage rise attributable to reaction inhibition was measured from the voltage rise observed at the beginning of the pause, and the resistance attributable to reaction inhibition was calculated from the following formula:

Resistance DCR (0.3 s) attributable to reaction inhibition = (Voltage rise (V) attributable to reaction inhibition/Current value during discharge "current value (A) at 3.0 C") $\times$ Facing area between positive and negative electrodes "2.8 cm$^2$").

Table 2 shows the results of the high-load current rest method.

[Table 2]

| | Graphite | | Single-walled CNT (Mass%) | CMC (Mass%) | SBR (Mass%) | $M_2 \times D^2$ in Formula (1) | DCR (0.3s) ($\Omega cm^2$) |
|---|---|---|---|---|---|---|---|
| | Content (Mass%) | Average particle size ($\mu$m) | | | | | |
| Com.Ex.1 | 97.50 | 17.0 | - | 1.00 | 1.50 | 289. 00 | 10.75 |
| Com Ex. 2 | 97. 50 | 5. 0 | - | 1.00 | 1.50 | 25.00 | 10.21 |
| Com. Ex. 3 | 98. 00 | 5.0 | 0.50 | 1.50 | - | 37.50 | 7.48 |
| Com. Ex. 4 | 98.50 | 25.0 | 0.50 | 1.00 | - | 625.00 | 9.20 |
| Com. Ex. 5 | 99.00 | 25.0 | 0.50 | 0. 50 | - | 312.50 | 8.34 |
| Example 1 | 98.50 | 5. 0 | 0.50 | 1.00 | - | 25.00 | 6. 73 |
| Example 2 | 99.50 | 17.0 | 0.50 | 0.50 | - | 144.50 | 7. 39 |
| Example 3 | 99.50 | 5.0 | 0.50 | 0.50 | - | 12.50 | 6.26 |
| Example 4 | 99.17 | 17.0 | 0.50 | 0.33 | - | 96.24 | 7.29 |
| Exmaple 5 | 99. 33 | 17.0 | 0.50 | 0.17 | - | 47.9 7 | 6.74 |
| Example 6 | 99.50 | 17.0 | 0.50 | - | - | 0.00 | 6. 05 |
| Example 7 | 99. 50 | 12.0 | 0.50 | - | - | 0.00 | 6. 03 |
| Example 8 | 99.50 | 5. 0 | 0.50 | - | - | 0.00 | 6.55 |
| Example 9 | 99.50 | 25.0 | 0.50 | - | - | 0.00 | 6.36 |

From the results obtained as described above, multiple regression analysis was performed. As a result, the following result was obtained:

$$DCR\ (0.3\ s) = 2.15\ M_1 + 0.00454\ (M_2 \times D^2) + 6.54$$

wherein $M_1$ represents the content of the binding agent (mass%); $M_2$ represents the content of the thickener and/or dispersant (mass%); and D represents an average particle size ($\mu$m) of the negative electrode active material.

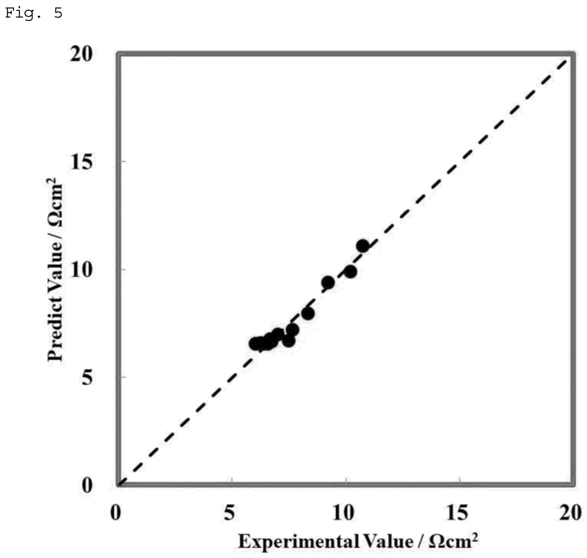

Fig. 5 shows a correlation diagram between predicted values of the reaction resistance DCR (0.3 s) from the calculation formula and experimental values of DCR (0.3 s). The results show that the predicted values of the reaction resistance DCR (0.3 s) from the calculation formula and the experimental values of DCR (0.3 s) show a very good correlation and that the statistical coefficient of determination $R^2$ is 0.94, which is very close to 1.

Test Example 3: Load Cycle Test

The lithium ion secondary batteries including the respective negative electrodes of Examples 1, 3, and 6 to 8 and Comparative Examples 1 to 3 were subjected to 10 cycles of a charge-discharge cycle test in which the following charge and discharge processes were regarded as one cycle: at 0°C, constant current, constant voltage charge (CCCV charge) was performed to an upper-limit voltage of 4.0 V at a charge rate of 0.75 C, followed by a 10-minute pause; and then, constant current discharge (CC discharge) was performed to a lower-limit voltage of 2.7 V at a discharge rate of 0.75 C, followed by a 10-minute pause.

Fig. 3 shows the results of charge-discharge cycle characteristics.

[Table 3]

| | Graphite | | Single-walled CNT (Mass%) | CMC (Mass%) | SBR (Mass%) | $M_2 \times D^2$ in Formula (1) | DCR (0. 3s) $\Omega cm^2$ | Cycle characteristics (%) |
|---|---|---|---|---|---|---|---|---|
| | Content (Mass%) | Average perticle size ($\mu$m) | | | | | | |
| Com. Ex. 1 | 97.50 | 17.0 | - | 1.00 | 1.50 | 289.00 | 10.75 | 97.7 |

(continued)

|  | Graphite | | Single-walled CNT (Mass%) | CMC (Mass%) | SBR (Mass%) | $M_2 \times D^2$ in Formula (1) | DCR (0. 3s) $\Omega cm^2$ | Cycle characteristics (%) |
|---|---|---|---|---|---|---|---|---|
|  | Content (Mass%) | Average perticle size ($\mu m$) |  |  |  |  |  |  |
| Com. Ex. 2 | 97.50 | 5.0 | - | 1.00 | 1.50 | 25.00 | 10.21 | 94.8 |
| Com. Ex. 3 | 98.00 | 5.0 | 0.50 | 1.50 | - | 37. 50 | 7.48 | 97.5 |
| Example 1 | 98.50 | 5.0 | 0.50 | 1.00 | - | 25.00 | 6.73 | 99. 4 |
| Example 3 | 99.50 | 5.0 | 0.50 | 0. 50 | - | 12.50 | 6.26 | 99.8 |
| Example 6 | 99.50 | 17.0 | 0.50 | - | - | 0.00 | 6. 05 | 99.1 |
| Example | 99.50 | 12.0 | 0.50 | - | - | 0.00 | 6.03 | 100 |
| Example 8 | 99.50 | 5. 0 | 0.50 | - | - | 0.00 | 6.55 | 100 |

The results show that when DCR (0.3 s) is 7.48 or more as determined from the following formula:

$$DCR\ (0.3\ s)\ =\ 2.15\ M_1\ +\ 0.00454\ (M_2 \times D^2)\ +\ 6.54,$$

it means that degradation of the cycle characteristics has occurred after only 10 cycles. Thus, it can be understood that the following must be satisfied in order to improve the cycle characteristics and the life characteristics:

$$2.15\ M_1\ +\ 0.00454\ (M_2 \times D^2)\ +\ 6.54\ \leq\ 7.40.$$

**Claims**

1. A composition for forming a negative electrode active material layer for lithium ion secondary batteries, the composition comprising at least:

   a negative electrode active material; and
   a carbon nanotube,
   wherein the composition satisfies the following formula (1):

   $$2.15\ M_1\ +\ 0.00454\ (M_2 \times D^2)\ +\ 6.54\ \leq\ 7.40 \quad (1)$$

   wherein $M_1$ represents the content of a binding agent (mass%); $M_2$ represents the content of a thickener and/or dispersant (mass%); and D represents an average particle size ($\mu m$) of the negative electrode active material.

2. The composition for forming a negative electrode active material layer for lithium ion secondary batteries according to claim 1,
   wherein, based on the total amount of the composition taken as 100 mass%,

   the content of the negative electrode active material is 96.6 to 99.9 mass%,
   the content of the carbon nanotube is 0.01 to 1.4 mass%,
   the content of a negative electrode constituent material other than the negative electrode active material and the carbon nanotube is 0 to 2.0 mass%, and
   the average particle size of the negative electrode active material is 0.1 to 30.0 $\mu m$.

3. The composition for forming a negative electrode active material layer for lithium ion secondary batteries according to claim 1 or 2, wherein the negative electrode active material is a material capable of absorbing and releasing lithium ions.

4. The composition for forming a negative electrode active material layer for lithium ion secondary batteries according to any one of claims 1 to 3, wherein the carbon nanotube is a single-walled carbon nanotube.

5. The composition for forming a negative electrode active material layer for lithium ion secondary batteries according to any one of claims 1 to 4, which is for use to reduce uneven reaction distribution in a lithium ion secondary battery.

6. The composition for forming a negative electrode active material layer for lithium ion secondary batteries according to any one of claims 1 to 5, which is for a lithium ion secondary battery for use in an electric vehicle for car sharing.

7. A negative electrode active material layer for lithium ion secondary batteries, comprising the composition for forming a negative electrode active material layer for lithium ion secondary batteries according to any one of claims 1 to 6.

8. The negative electrode active material layer for lithium ion secondary batteries according to claim 7, which is for a lithium ion secondary battery for use in an electric vehicle for car sharing.

9. A negative electrode for lithium ion secondary batteries, comprising the negative electrode active material layer for lithium ion secondary batteries according to claim 7 or 8.

10. The negative electrode for lithium ion secondary batteries according to claim 9, which is for a lithium ion secondary battery for use in an electric vehicle for car sharing.

11. A lithium ion secondary battery comprising the negative electrode for lithium ion secondary batteries according to claim 9 or 10.

12. The lithium ion secondary battery according to claim 11,

wherein a resistance DCR (0.3 s) attributable to reaction inhibition satisfies the following formula (3):

$$2.15\,M_1 + 0.00454\,(M_2 \times D^2) + 5.00 \leq DCR\,(0.3\,s) \leq 2.15\,M_1 + 0.00454\,(M_2 \times D^2) + 7.40 \qquad (3)$$

wherein $M_1$ represents the content of a binding agent (mass%); $M_2$ represents the content of a thickener and/or dispersant (mass%); and D represents an average particle size ($\mu$m) of the negative electrode active material, wherein the resistance DCR (0.3 s) is determined as below:

a state of charge (SOC) is defined according to the following formula (2):

```
SOC (%) = Remaining capacity (Ah)/Full charge capacity (Ah) × 100
(2);
```

a voltage rise during pause is measured after discharging from an SOC of 100% to an SOC of 90% at 25°C and 3.0 C and then pausing for 10 minutes; and
from the measured voltage rise, the reaction resistance is separated into two components, i.e., resistance DCR (0.3 s) attributable to reaction inhibition and resistance DCR (0.3 s - 10 min) attributable to ion transport inhibition, to calculate the resistance DCR (0.3 s).

13. The lithium ion secondary battery according to claim 11 or 12 for use in an electric vehicle for car sharing.

Fig. 1

Fig. 2

Fig. 3

Fig. 4

Fig. 5

## INTERNATIONAL SEARCH REPORT

| | International application No. |
|---|---|
| | **PCT/JP2024/010981** |

| | |
|---|---|
| **A.** | **CLASSIFICATION OF SUBJECT MATTER** |

***H01M 4/13***(2010.01)i; ***H01M 4/62***(2006.01)i; ***H01M 10/052***(2010.01)i
FI:   H01M4/13; H01M4/62 Z; H01M10/052

According to International Patent Classification (IPC) or to both national classification and IPC

| | |
|---|---|
| **B.** | **FIELDS SEARCHED** |

Minimum documentation searched (classification system followed by classification symbols)

H01M4/13; H01M4/62; H01M10/052

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2017/199884 A1 (MEIJO NANO CARBON CO., LTD.) 23 November 2017 (2017-11-23) paragraphs [0029], [0084] | 1-5, 7, 9, 11 |
| Y | | 6, 8, 10, 13 |
| A | | 12 |
| X | JP 2019-50186 A (HONDA MOTOR CO., LTD.) 28 March 2019 (2019-03-28) claim 1, paragraph [0042] | 1-5, 7, 9, 11 |
| Y | | 6, 8, 10, 13 |
| A | | 12 |
| Y | JP 2018-121411 A (TOYOTA JIDOSHA KABUSHIKI KAISHA) 02 August 2018 (2018-08-02) claims, paragraph [0030] | 6, 8, 10, 13 |
| Y | JP 2013-70500 A (NISSAN MOTOR CO., LTD.) 18 April 2013 (2013-04-18) paragraphs [0010]-[0011] | 6, 8, 10, 13 |

| ☑ Further documents are listed in the continuation of Box C. | ☑ See patent family annex. |
|---|---|

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **10 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/010981**

| C. | DOCUMENTS CONSIDERED TO BE RELEVANT | |
|---|---|---|
| Category* | Citation of document, with indication, where appropriate, of the relevant passages | Relevant to claim No. |
| P, X | JP 2023-126032 A (WASEDA UNIV.) 07 September 2023 (2023-09-07)<br>claims, paragraphs [0030], [0038]-[0039] | 1, 3-5, 7, 9, 11 |

Form PCT/ISA/210 (second sheet) (July 2022)

## INTERNATIONAL SEARCH REPORT
### Information on patent family members

International application No.

**PCT/JP2024/010981**

| Patent document cited in search report | | | Publication date (day/month/year) | Patent family member(s) | | | Publication date (day/month/year) |
|---|---|---|---|---|---|---|---|
| WO | 2017/199884 | A1 | 23 November 2017 | US 2023/0041736 A1 paragraphs [0034], [0102] JP 2022-19738 A CN 109196687 A | | | |
| JP | 2019-50186 | A | 28 March 2019 | US 2019/0036103 A1 claim 1, paragraph [0050] EP 3439075 A1 KR 10-2019-0013664 A CN 116565145 A | | | |
| JP | 2018-121411 | A | 02 August 2018 | US 2018/0208213 A1 claims, paragraph [0040] CN 108528437 A | | | |
| JP | 2013-70500 | A | 18 April 2013 | (Family: none) | | | |
| JP | 2023-126032 | A | 07 September 2023 | (Family: none) | | | |

Form PCT/ISA/210 (patent family annex) (July 2022)